# EUROPEAN PATENT APPLICATION

(11) **EP 4 470 714 A2**
(43) Date of publication of application: **04.12.2024**
(21) Application number: 24177170.8
(22) Date of filing: 21.05.2024
(51) Int. Cl.: B23P 6/00, B23K 9/04, B23K 26/342, B33Y 10/00, F01D 5/00

(54) **HYBRID ADDITIVE MANUFACTURING REPAIR METHOD**

(30) Priority: 31.05.2023 US 202318326908
(71) Applicant: RTX Corporation, Farmington, CT 06032 (US)
(72) Inventor: VARGAS, Chris, West Hartford (US); PAUN, Jillian R., Colchester (US); READ, Douglas M., Marlborough (US)
(74) Representative: Dehns

(57) **Abstract**

A repair method can comprise: machining a wall (210) of the case (200) to remove a damaged portion of the wall (218), the case including a metal alloy, the case originally formed by casting; arc welding an intermediate layer (520) of a first material to a base surface (512) formed from the machining to form a first portion of a repaired wall; and building up, via direct energy deposition, a remainder (530) of the repaired wall with a second material.

## Description

### FIELD

The present disclosure generally relates to a hybrid additive manufacturing repair method, and more particularly to a repair method for an aircraft component made of a cast nickel-based alloy.

### BACKGROUND

Cases for use in gas turbine engines (e.g., mid-turbine frame cases or the like) can wear, crack, corrode, etc. during operation. At a respective maintenance interval, wear surfaces of the case may have to be repaired prior to returning the case into service. Methods, such as laser powder deposition, direct energy deposition, laser welding, electron beam welding, etc., for repairing wear surfaces of fully heat treated, engine run cases for gas turbine engines have been prone to liquidation cracking.

Liquation cracking is defined as cracking along grain boundaries in the heat affected zone (HAZ) during welding. The cracking is located in the partially melted zone (PMZ) of the HAZ. The PMZ is the region of the HAZ next to the fusion zone. In the PMZ, localized melting along the grain boundaries may occur. The presence of liquid at the grain boundary reduces the capability of the grain boundaries to accommodate strain induced by the welding process resulting in cracks occurring along the grain boundaries. Cast alloys are more sensitive to HAZ liquation cracking than wrought alloys. Because of the thermal-mechanical processing wrought alloys receive, the compositions of wrought alloys are more homogeneous than cast alloys. As a result, wrought alloys have smaller concentrations of minor alloy elements at the grain boundaries, such as P, S, or B, which are melting point suppressants. Cast alloys also tend to have larger grains than wrought.

Liquation cracking is promoted by large grain size. Smaller grains accommodate strain more readily than larger grains because a greater amount of grain boundary sliding is present with smaller grains. Larger grains have less grain boundaries and less grain boundary surface area, which can lead to a thicker liquid layer between the grains. The thicker liquid layer takes longer to solidify, increasing the chances for liquation cracks to form.

Secondary grain boundary particles are very common in complex aerospace alloys. These can be carbides, borides, or other phases, such as Laves. In nickel containing alloys (Inconel^{®} 718 and Inconel^{®} 625, as examples), niobium rich carbides are susceptible to melting from the rapid heating from welding. In cast nickel-based alloys which contain niobium, the niobium tends to segregate to the interdendritic regions during solidification which can result in the formation of a niobium rich (~25% Nb) Laves phase. These niobium rich interdentritic regions can have a solidus to liquidus range of roughly 2000 °F (1,093 °C) to 2300 °F (1,260 °C).

Nickel alloys, which exhibit higher amount of grain boundary liquids during welding, are more sensitive to HAZ liquation cracking. Alloy such as Inconel^{®} 718 and X-750 are known to be sensitive to HAZ liquation cracking. Depending on the geometry and welding process, Inconel 625 may not be completely immune to HAZ liquation cracks.

Welding an alloy in a solution heat treated condition is often used to minimize HAZ liquation cracking. A solution heat treatment will put some constituents which may liquate during welding, such as carbides, into solution, reducing the amount of grain boundary liquids. The solution heat treatment also softens the material as the strengthening precipitates are dissolved into the matrix. With a lower strength, the alloy accommodates the welding stresses by localized yielding. However, in repair, not all parts are capable of being solution heat treated prior to welding.

Some alloys may exhibit different sensitivity to HAZ liquation cracks under different welding processes. It is the nonlinear temperature gradient induced by the welding process that is believed to drive the formation of HAZ liquation cracking. The GTAW process produces a lower temperature gradient than the electron beam welding or laser beam welding process due to the GTAW lower energy density. However, GTAW tends to produce a larger weld size, which increases the total amount of stress from welding. In general, GTAW process is typically less sensitive to HAZ liquation than electron beam welding process although the welding parameters for both processes may be designed to minimize HAZ liquation cracking sensitivity.

Part geometry, especially the thickness and any features that may induce stress concentrations, are additional contributors to HAZ liquation cracking. As part thickness increases, stresses from welding increase, increasing the sensitivity to HAZ liquation cracking. HAZ liquation tends to occur more below the surface than at surface since the degree of constraint increases as the distance from the surface increases.

### SUMMARY

Disclosed herein is a method of repairing a case. In various embodiments, the method comprises: machining a wall of the case to remove a damaged portion of the wall, the case including a metal alloy, the case originally formed by casting; arc welding an intermediate layer of a first material to a base surface formed from the machining to form a first portion of a repaired wall; and building up, via direct energy deposition, a remainder of the repaired wall with a second material.

In various embodiments, the wall extends axially from a radial flange of the case.

In various embodiments, the arc welding is one of gas tungsten arc welding ("GTAW"), shield metal arc welding ("SMA"), plasma arc welding ("PAW").

In various embodiments, a height ratio of the remainder of the repaired wall to the intermediate layer is between 20:1 and 2:1.

In various embodiments, the first material has one of a lower strength or a same strength relative to the second material.

In various embodiments, a base material of the wall is the second material, and wherein the second material is different from the first material. In various embodiments, the metal alloy comprises between 50% and 55% nickel, between 17% and 21% chromium, between 15% and 21% iron, between 4.75% and 5.5% niobium plus tantalum, between 2.8% and 3.3% molybdenum, between 0.65% and 1.15% titanium, between 0.2% and 0.8% aluminum, a maximum of 0.08% carbon, and nominal amounts (in weight percentage) of other elements. In various embodiments, the first material of the intermediate layer comprises one of: a first metal alloy including a nominal composition of nickel fifty-eight percent (58%), chromium 20% to 23%, iron up to 5%, molybdenum between 8% to 10%, niobium (plus tantalum) between 3.15% to 4.15%; a second metal alloy including a nominal composition of nickel 63%, cobalt up to 2.5%, iron 6%, chromium 5%, molybdenum 25%, tungsten up to 1%, manganese up to 1%, silicon up to 1%, vanadium up to 0.6%, and carbon up to 0.12%; or a third metal alloy including a third nominal composition of between 50% and 55% nickel, between 17% and 21% chromium, between 15% and 21% iron, between 4.75% and 5.5% niobium plus tantalum, between 2.8% and 3.3% molybdenum, between 0.65% and 1.15% titanium, between 0.2% and 0.8% aluminum, a maximum of 0.08% carbon, and nominal amounts (in weight percentage) of other elements.

In various embodiments, the wall includes a radially outer surface, and the damaged portion of the wall includes a worn area in the radially outer surface.

A method of repairing a flange of an aircraft component is disclosed herein. In various embodiments, the method comprises: removing a damaged flange from the aircraft component, the aircraft component including a metal alloy, the aircraft component originally formed by casting; arc welding an intermediate layer of a first material to a base surface formed from the removing, the intermediate layer forming a portion of a repaired flange; and building up, via direct energy deposition, a remainder of the repaired flange with a second material to form a remaining portion of the repaired flange.

In various embodiments, the arc welding is one of gas tungsten arc welding ("GTAW"), shield metal arc welding ("SMA"), plasma arc welding ("PAW").

In various embodiments, a height ratio of the remainder of the repaired flange to the intermediate layer of the repaired flange is between 20:1 and 2:1.

In various embodiments, the metal alloy comprises between 50% and 55% nickel, between 17% and 21% chromium, between 15% and 21% iron, between 4.75% and 5.5% niobium plus tantalum, between 2.8% and 3.3% molybdenum, between 0.65% and 1.15% titanium, between 0.2% and 0.8% aluminum, a maximum of 0.08% carbon, and nominal amounts (in weight percentage) of other elements. In various embodiments, the first material of the intermediate layer comprises one of: a first metal alloy including a nominal composition of nickel fifty-eight percent (58%), chromium 20% to 23%, iron up to 5%, molybdenum between 8% to 10%, niobium (plus tantalum) between 3.15% to 4.15%, or a second metal alloy including a nominal composition of nickel 63%, cobalt up to 2.5%, iron 6%, chromium 5%, molybdenum 25%, tungsten up to 1%, manganese up to 1%, silicon up to 1%, vanadium up to 0.6%, and carbon up to 0.12%. In various embodiments, the second material is different from the first material, and the first material is a same material as the metal alloy.

In various embodiments, the first material has a lower strength relative to the second material.

A repaired cast component is disclosed herein. In various embodiments, the repaired cast component comprises: a wall defining an arcuate shape, the wall made of a base metal alloy, the wall originally formed by casting; and a flange extending from the wall, the flange comprising an intermediate layer formed from a first metal alloy and a remainder portion formed from a second metal alloy, the second metal alloy different from the first metal alloy.

In various embodiments, the base metal alloy comprises between 50% and 55% nickel, between 17% and 21% chromium, between 15% and 21% iron, between 4.75% and 5.5% niobium plus tantalum, between 2.8% and 3.3% molybdenum, between 0.65% and 1.15% titanium, between 0.2% and 0.8% aluminum, a maximum of 0.08% carbon, and nominal amounts (in weight percentage) of other elements.

In various embodiments, the second metal alloy is a same metal as the base metal alloy.

In various embodiments, the first metal alloy is one of: a first nominal composition of nickel fifty-eight percent (58%), chromium 20% to 23%, iron up to 5%, molybdenum between 8% to 10%, niobium (plus tantalum) between 3.15% to 4.15%, or a second nominal composition of nickel 63%, cobalt up to 2.5%, iron 6%, chromium 5%, molybdenum 25%, tungsten up to 1%, manganese up to 1%, silicon up to 1%, vanadium up to 0.6%, and carbon up to 0.12%.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates a cross-sectional view of a gas-turbine engine, in accordance with various embodiments.
FIG. 2 illustrates a cross-sectional view of a portion of gas-turbine engine, in accordance with various embodiments.
FIG. 3A illustrates a cross-sectional view of a portion of a case formed by casting, in accordance with various embodiments.
FIG. 3B illustrates a perspective view of the case from FIG. 3A, in accordance with various embodiments.
FIG. 4 illustrates a repair method, in accordance with various embodiments.
FIG. 5 illustrates exemplary steps of the repair method, in accordance with various embodiments.

### DETAILED DESCRIPTION

The following detailed description of various embodiments herein refers to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

As used herein, "aft" refers to the direction associated with the tail (e.g., the back end) of an aircraft, or generally, to the direction of exhaust of the gas turbine engine. As used herein, "forward" refers to the direction associated with the nose (e.g., the front end) of an aircraft, or generally, to the direction of flight or motion.

As used herein, directed energy deposition ("DED") is an additive manufacturing process which uses a focused energy source, such as a laser or electron beam to melt a material which is simultaneously deposited by a nozzle (e.g., a powder material, a wire form material, or the like).

As used herein, "arc welding" is a welding process that is used to join metal to metal by using electricity to create enough heat to melt both metals that join, and bond, in response to cooling.

As used herein, "gas tungsten arc welding," as referred to herein, is an arc welding process that uses a non-consumable tungsten electrode to produce a weld (e.g., between an intermediate layer and a base metal).

As used herein, "shielded metal arc welding" is an arc welding process that uses a consumable electrode covered with a flux to lay the weld.

As used herein, "plasma arc welding" is an arc welding process where an electric arc is formed between an electrode and the workpiece (e.g., an intermediate layer and a base metal). In a plasma arc welding process, the electrode can be positioned within a body of the torch, so the plasma arc is separated from the shielding gas envelope, in accordance with various embodiments.

In the aerospace industry, forging and/or casting is/are used to produce parts having complex shapes such as blades and vanes, and annular-shaped components such as engine cases, flanges and seals. One material which has been widely used to produce forged parts for use in applications that benefit from high strength, low crack growth rates, and/or high stress rupture resistance is a nickel-based superalloy composition that, by weight percentage, comprises between 50% and 55% nickel, between 17% and 21% chromium, between 15% and 21% iron, between 4.75% and 5.5% niobium plus tantalum, between 2.8% and 3.3% molybdenum, between 0.65% and 1.15% titanium, between 0.2% and 0.8% aluminum, a maximum of 0.08% carbon, and nominal amounts (in weight percentage) of other elements (referred to herein as "718"), and which is available under the trade name INCONEL^{®} 718, and is sold by the Special Metals Corporation of Huntington, West Virginia, USA. Exemplary parts which may be formed from 718 include gas turbine engine cases, flanges and seals, as well as blades and vanes.

Once formed, 718 may be machined and heat treated to obtain desired properties. The heat treatment may be performed using Aerospace Materials Specifications (AMS) standard AMS 5383.

718 has significantly higher strength capabilities relative to other austenitic nickel-chromium-based alloys, such as a 625 alloy having a nominal composition of nickel fifty-eight percent (58%), chromium 20% to 23%, iron up to 5%, molybdenum between 8% to 10%, niobium (plus tantalum) between 3.15% to 4.15% that is available under the trade name INCONEL 625^{™}, available from Special Metals Corporation of New Hartford, New York, USA (referred to herein as "625"). Another alloy with lower strength capabilities relative to a 718 alloy that is easier to weld relative to 718 has a nominal composition of nickel 63%, cobalt up to 2.5%, iron 6%, chromium 5%, molybdenum 25%, tungsten up to 1%, manganese up to 1%, silicon up to 1%, vanadium up to 0.6%, and carbon up to 0.12% that is available under the trade name HASTELLOY^{®} W and is sold by Haynes International of Kokoma, Indiana, USA (referred to herein as "HastW").

Traditionally manufactured (e.g., cast) 718 parts can to be difficult to repair with additive processes. Moreover, repairing 718 parts with a DED build up can result in liquation cracking.

Disclosed herein is a repair method (i.e., a method for repairing a wear surface of a case for use in a gas turbine engine). In various embodiments, the repair method disclosed herein prevents liquation cracking during the repair of a case (e.g., a mid-turbine frame inner case or the like), or any cast metal component (e.g., a cast Inconel 718 part). The repair method disclosed herein utilizes multiple methods to build up the surface and prevent the formation of liquation cracking.

In various embodiments, a first layer (or first layers) of material are deposited via an automated arc welding process (e.g., gas tungsten arc welding ("GTAW"), shield metal arc welding ("SMA"), plasma arc welding ("PAW"), or other high heat input, low power density arc welding process). The first layer may have a same material as the component being repaired (e.g., Inconel 718 in response to repairing a cast Inconel 718 component) or it may be what is referred to as a transition layer (e.g., a layer of low strength, very weldable alloy, such as 625 or HastW). Then, the repair method can further comprises utilizing an direct energy deposition ("DED") process to build up the remainder of the part geometry. In various embodiments, with no melting occurring in the liquation cracking prone base metal, the component being repaired will not crack. All or significantly all melting may be contained in the added layers, in accordance with various embodiments.

In various embodiments, the repair method disclosed herein can allow for parts to be repaired utilizing the DED process to build up large sections of parts in an efficient and cost effect manner, while preventing the formation of liquation cracks, which can have a detrimental effect on part life.

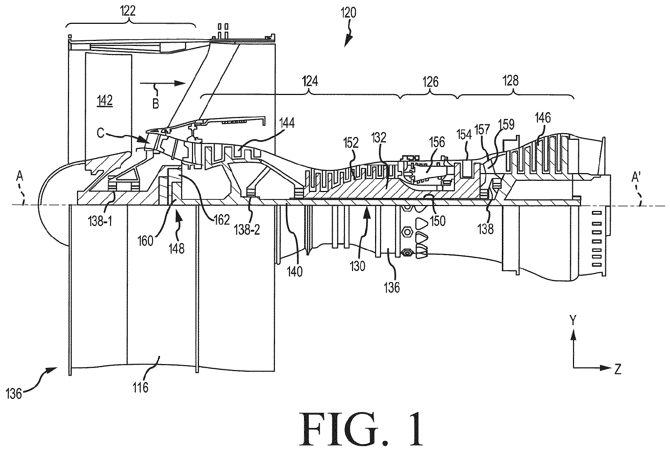

In various embodiments, and with reference to FIG. 1, a gas turbine engine 120 is disclosed. Gas turbine engine 120 may comprise a two-spool turbofan that generally incorporates a fan section 122, a compressor section 124, a combustor section 126, and a turbine section 128. Gas turbine engine 120 may also comprise, for example, an augmenter section, and/or any other suitable system, section, or feature. In operation, fan section 122 may drive air along a bypass flow-path B, while compressor section 124 may further drive air along a core flow-path C for compression and communication into combustor section 126, before expansion through turbine section 128. FIG. 1 provides a general understanding of the sections in a gas turbine engine, and is not intended to limit the disclosure. The present disclosure may extend to all types of applications and to all types of turbine engines, including, for example, such as turbojets, turboshafts, and three spool (plus fan) turbofans wherein an intermediate spool includes an intermediate pressure compressor ("LPC") between a Low Pressure Compressor ("LPC") and a High Pressure Compressor ("HPC"), and an Intermediate Pressure Turbine ("IPT") between the High Pressure Turbine ("HPT") and the Low Pressure Turbine ("LPT").

In various embodiments, gas turbine engine 120 may comprise a low speed spool 130 and a high speed spool 132 mounted for rotation about an engine central longitudinal axis A-A' relative to an engine static structure 136 via one or more bearing systems 138 (shown as, for example, bearing system 138-1 and bearing system 138-2 in FIG. 1). It should be understood that various bearing systems 138 at various locations may alternatively or additionally be provided, including, for example, bearing system 138, bearing system 138-1, and/or bearing system 138-2.

In various embodiments, low speed spool 130 may comprise an inner shaft 140 that interconnects a fan 142, a low pressure (or first) compressor section ("LPC") 144, and a low pressure (or first) turbine section 146. Inner shaft 140 may be connected to fan 142 through a geared architecture 148 that can drive fan 142 at a lower speed than low speed spool 130. Geared architecture 148 may comprise a gear assembly 160 enclosed within a gear housing 162. Gear assembly 160 may couple inner shaft 140 to a rotating fan structure. High speed spool 132 may comprise an outer shaft 150 that interconnects a high pressure compressor ("HPC") 152 (e.g., a second compressor section) and high pressure (or second) turbine section 154. A combustor 156 may be located between HPC 152 and high pressure turbine 154. A mid-turbine frame 157 of engine static structure 136 may be located generally between high pressure turbine 154 and low pressure turbine 146. Mid-turbine frame 157 may support one or more bearing systems 138 in turbine section 128. Inner shaft 140 and outer shaft 150 may be concentric and may rotate via bearing systems 138 about engine central longitudinal axis A-A'. As used herein, a "high pressure" compressor and/or turbine may experience a higher pressure than a corresponding "low pressure" compressor and/or turbine.

In various embodiments, the air along core airflow C may be compressed by LPC 144 and HPC 152, mixed and burned with fuel in combustor 156, and expanded over high pressure turbine 154 and low pressure turbine 146. Mid-turbine frame 157 may comprise airfoils 159 located in core airflow path C. Low pressure turbine 146 and high pressure turbine 154 may rotationally drive low speed spool 130 and high speed spool 132, respectively, in response to the expansion.

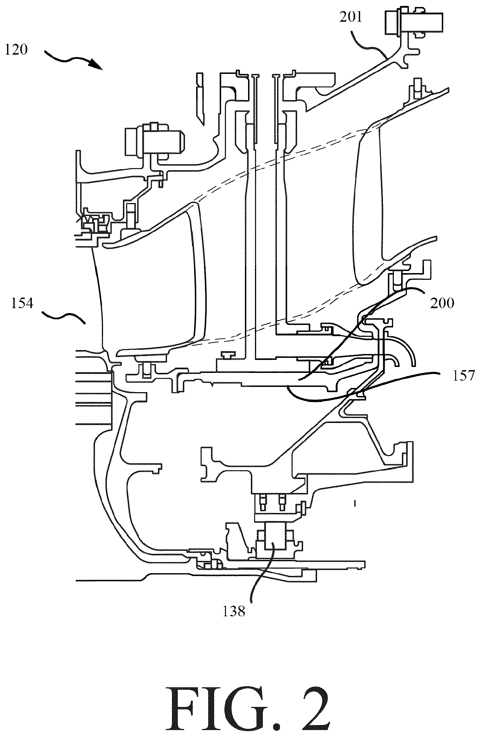

With reference to FIG. 2, an exemplary mid-turbine frame 157 of gas turbine engine 120 is shown, in accordance with various embodiments. Mid-turbine frame 157 may be a static structure disposed proximate (aft as depicted) of a rotating structure such as high pressure turbine 154. Mid-turbine frame 157 may be proximate bearing system 138 and mechanically coupled to bearing system 138 so that deflection of mid-turbine frame 157 may displace or otherwise influence the operation of bearing system 38. An inner case 200 of mid-turbine frame 157 may be a static (i.e., non-rotating) structure disposed radially inward from outer case 201. In various embodiments, mid-turbine frame 57 and inner case 200 may be made from an austenitic nickel-chromium-based alloy such as that sold under the trademark Inconel^{®}, which is available from Special Metals Corporation of New Hartford, New York, USA (e.g., Inconel^{®} 625 or Inconel^{®} 718). Inner case 200 may be cast or forged with features on inner case 200 machined. In various embodiments, the inner case 200 is formed via casting.

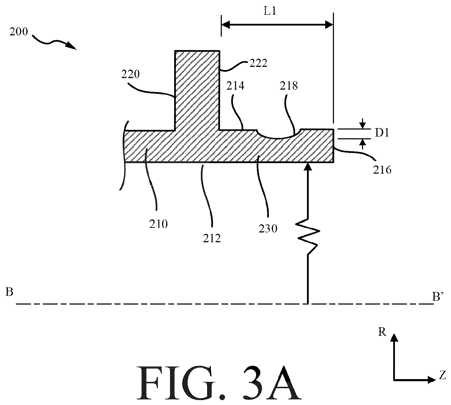

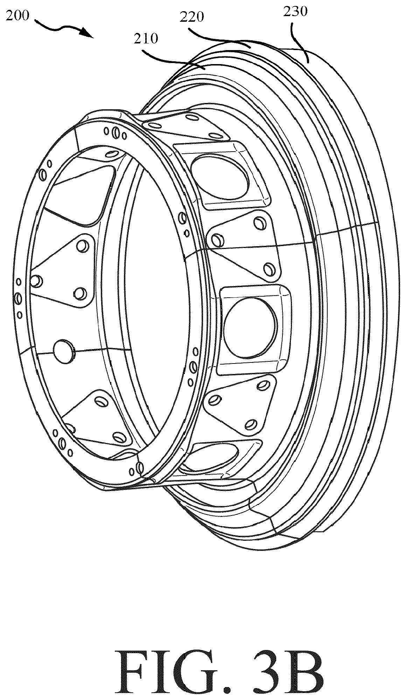

Referring now to FIGs. 3A and 3B, a cross-sectional view (FIG. 3A) of a portion of the inner case 200 and a perspective view of the inner case 200 (FIG. 3B) at a respective maintenance interval (e.g., after 25,000 flight cycles or the like) are illustrated, in accordance with various embodiments. In various embodiments, the inner case 200 comprises an annular structure. In this regard, the cross-section of FIG. 3A can be a constant cross-sectional shape that is revolved around a longitudinal axis B-B' of the inner case 200. In various embodiments, the cross-sectional shape can vary at local locations circumferentially about the longitudinal axis B-B' (e.g., for an aperture, a mounting interface, or other machined feature as shown in Fig. 3B). In this regard, the cross-sectional shape of FIG. 3A can correspond to a general cross-sectional shape that is revolved circumferentially around the longitudinal axis B-B'.

The inner case 200 includes a wall 210 including a radially inner surface 212 spaced apart radially from a radially outer surface 214 and defining a thickness therebetween. "Radially" as referred to herein is relative to a longitudinal centerline defined by the inner case 200 (e.g., the longitudinal axis B-B'). In various embodiments, the longitudinal axis B-B' is parallel to the engine central longitudinal axis A-A'. In various embodiments, the longitudinal axis B-B' is co-axial with the longitudinal axis A-A'. However, the present disclosure is not limited in this regard. In various embodiments, the wall 210 comprises a longitudinal end 216.

In various embodiments, the inner case 200 further comprises a radial flange 220 that extends radially outward from the radially outer surface 214 of the wall 210 and defines an axial surface 222. In various embodiments, the wall 210 further comprises an axial flange 230 extending axially from the radial flange 220 to the longitudinal end 216.

Accordingly, the longitudinal end 216 is spaced apart axially from the axial surface 222 of the radial flange 220 by an axial length L1. During operation, the radially outer surface 214 can experience wear. In this regard, the radially outer surface 214 can include a wear portion 218 defining a wear depth D1 relative to the radially outer surface 214. In response to the wear depth D1 exceeding a threshold wear depth, the inner case may no longer meet a serviceable limit. Stated another way, if the wear depth D1 exceeds the threshold wear depth, a portion of the wall 210 with the wear portion 218 (e.g., the axial flange 230) either has to be repaired, or the inner case 200 has to be replaced. In various embodiments, by repairing the axial flange 230, the inner case 200 can be reentered into service, providing significant cost savings relative to replacing the inner case 200 in its entirety.

Although described herein as repairing an axial flange 230 of an inner case 200 for a gas turbine engine 120 from FIG. 1 with the methods herein, the present disclosure is not limited in this regard. For example, the hybrid repair process described further herein can be utilized for any metal component that is originally manufactured by a casting process and subject to liquation cracking in response to utilizing a DED process for building up a repaired portion, as described further herein.

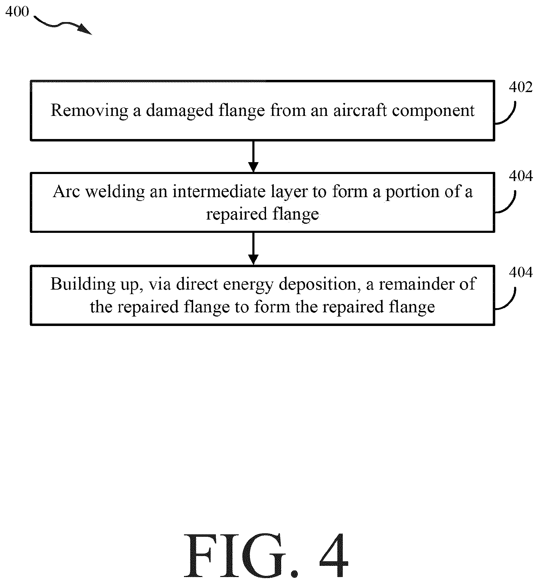

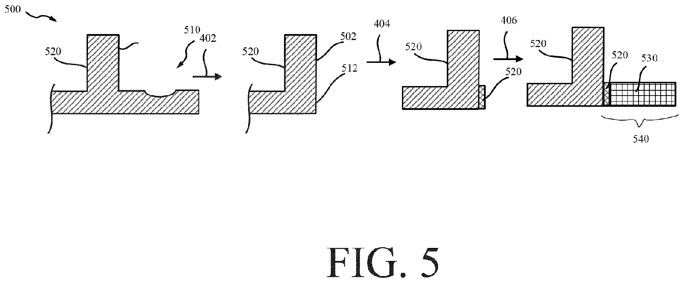

Referring now to FIGs. 4 and 5, a flow chart (FIG. 4) of a method 400 method of repairing an aircraft component 500 (e.g., inner case 200 from FIGs. 2 and 3A-B) and illustrative steps of the method of FIG. 4 (FIG. 5) are illustrated, in accordance with various embodiments. The method comprises removing (e.g., via machining or the like) a damaged flange 510 (e.g., axial flange 230 of inner case 200 from FIGs. 3A and 3B) from the aircraft component 500 (step 402). In various embodiments, the aircraft component 500 includes a metal alloy (e.g., 718 as described previously herein). In various embodiments, the aircraft component 500 is originally formed by casting. In this regard, the aircraft component 500 can be susceptible to liquation cracking if exposed directly to a DED laser, in accordance with various embodiments.

In various embodiments, the method 400 further comprises arc welding an intermediate layer 520 of a first material to a base surface 512 formed from the removing step (e.g., step 402) (step 404). In various embodiments, the intermediate layer 520 forms a portion of a repaired flange 540. In various embodiments, the first material can comprise a material that has a lower strength relative to the metal alloy of the aircraft component (e.g., 625 or HastW). In this regard, the first material can be easier to weld relative to the metal alloy of the aircraft component 500, in accordance with various embodiments. In various embodiments, the base surface 512 can be flush with a surface 502 defined by the aircraft component (e.g., by a radial flange 220 of the inner case 200 as shown in FIG. 3A). In various embodiments, the arc welding is one of gas tungsten arc welding ("GTAW'), shield metal arc welding ("SMA"), plasma arc welding ("PAW").

In various embodiments, the method 400 further comprises building up, via direct energy deposition, a remainder of the repaired flange 540 (e.g., a repaired wall for the case 200 from FIG. 3A to replace the axial flange 230, i.e., a damaged flange) with a second material to form a remainder portion 530 of the repaired flange 540 (step 406). In various embodiments, the first material has a lower strength relative to the second material. In various embodiments, a base material of the aircraft component 500 (e.g., wall 210 of inner case 200 from FIG. 3A) is the second material, and the second material is different from the first material.

In various embodiments, the repaired flange 540 extends axially from a radial flange (e.g., radial flange 220 of inner case 200 from FIG. 3A). In various embodiments, a height ratio (or length ratio) of the remainder portion 530 of the repaired flange 540 (or repaired wall) to the intermediate layer 520 is between 20:1 and 2:1, or between 20:1 and 3:1 or between 20:1 and 5:1. In this regard, the intermediate layer 520 can merely be provided as a transition layer between the base material of the aircraft component 500 and the remainder portion 530, which can provide a smooth transition between the aircraft component and the remainder portion 530 and/or prevent liquation cracking, in accordance with various embodiments.

Benefits, other advantages, and solutions to problems have been described herein regarding specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, any of the above-described concepts can be used alone or in combination with any or all the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible considering the above teaching.

## Claims

1. A method of repairing a case, the method comprising:
machining a wall of the case to remove a damaged portion of the wall, the case including a metal alloy, the case originally formed by casting;
arc welding an intermediate layer of a first material to a base surface formed from the machining to form a first portion of a repaired wall; and
building up, via direct energy deposition, a remainder of the repaired wall with a second material.

2. The method of claim 1, wherein the wall extends axially from a radial flange of the case.

3. The method of claim 1 or 2, wherein the arc welding is one of gas tungsten arc welding ("GTAW"), shield metal arc welding ("SMA"), plasma arc welding ("PAW").

4. The method of claim 1, 2 or 3, wherein a height ratio of the remainder of the repaired wall to the intermediate layer is between 20:1 and 2:1.

5. The method of any preceding claim, wherein the first material has a lower strength relative to the second material.

6. The method of any preceding claim, wherein a base material of the wall is the second material, and wherein the second material is different from the first material.

7. The method of any preceding claim, wherein the metal alloy comprises between 50% and 55% nickel, between 17% and 21% chromium, between 15% and 21% iron, between 4.75% and 5.5% niobium plus tantalum, between 2.8% and 3.3% molybdenum, between 0.65% and 1.15% titanium, between 0.2% and 0.8% aluminum, a maximum of 0.08% carbon, and nominal amounts (in weight percentage) of other elements.

8. The method of any preceding claim, wherein the first material of the intermediate layer comprises at least one of:
a first metal alloy including a first nominal composition of nickel fifty-eight percent (58%), chromium 20% to 23%, iron up to 5%, molybdenum between 8% to 10%, niobium (plus tantalum) between 3.15% to 4.15%,
a second metal alloy including a second nominal composition of nickel 63%, cobalt up to 2.5%, iron 6%, chromium 5%, molybdenum 25%, tungsten up to 1%, manganese up to 1%, silicon up to 1%, vanadium up to 0.6%, and carbon up to 0.12%, and
a third metal alloy including a third nominal composition of between 50% and 55% nickel, between 17% and 21% chromium, between 15% and 21% iron, between 4.75% and 5.5% niobium plus tantalum, between 2.8% and 3.3% molybdenum, between 0.65% and 1.15% titanium, between 0.2% and 0.8% aluminum, a maximum of 0.08% carbon, and nominal amounts (in weight percentage) of other elements.

9. The method of any preceding claim, wherein:
the wall includes a radially outer surface, and
the damaged portion of the wall includes a worn area in the radially outer surface.

10. A method of repairing a flange of an aircraft component, the method comprising:
removing a damaged flange from the aircraft component, the aircraft component including a metal alloy, the aircraft component originally formed by casting;
arc welding an intermediate layer of a first material to a base surface formed from the removing, the intermediate layer forming a portion of a repaired flange; and
building up, via direct energy deposition, a remainder of the repaired flange with a second material to form a remaining portion of the repaired flange.

11. The method of claim 10, wherein the arc welding is one of gas tungsten arc welding ("GTAW"), shield metal arc welding ("SMA"), plasma arc welding ("PAW"); and/or
wherein a height ratio of the remainder of the repaired flange to the intermediate layer of the repaired flange is between 20:1 and 2:1; and/or
wherein the metal alloy comprises between 50% and 55% nickel, between 17% and 21% chromium, between 15% and 21% iron, between 4.75% and 5.5% niobium plus tantalum, between 2.8% and 3.3% molybdenum, between 0.65% and 1.15% titanium, between 0.2% and 0.8% aluminum, a maximum of 0.08% carbon, and nominal amounts (in weight percentage) of other elements.

12. The method of claim 10 or 11, wherein the first material of the intermediate layer comprises at least one of:
a first metal alloy including a nominal composition of nickel fifty-eight percent (58%), chromium 20% to 23%, iron up to 5%, molybdenum between 8% to 10%, niobium (plus tantalum) between 3.15% to 4.15%, or
a second metal alloy including a nominal composition of nickel 63%, cobalt up to 2.5%, iron 6%, chromium 5%, molybdenum 25%, tungsten up to 1%, manganese up to 1%, silicon up to 1%, vanadium up to 0.6%, and carbon up to 0.12%.

13. The method of claim 10, 11 or 12, wherein the second material is different from the first material, and wherein the first material is a same material as the metal alloy; and/or
wherein the first material has one of a lower strength or a same strength relative to the second material.

14. A repaired cast component, comprising:
a wall defining an arcuate shape, the wall made of a base metal alloy, the wall originally formed by casting; and
a flange extending from the wall, the flange comprising an intermediate layer formed from a first metal alloy and a remainder portion formed from a second metal alloy, the second metal alloy different from the first metal alloy.

15. The repaired cast component of claim 14, wherein the base metal alloy comprises between 50% and 55% nickel, between 17% and 21% chromium, between 15% and 21% iron, between 4.75% and 5.5% niobium plus tantalum, between 2.8% and 3.3% molybdenum, between 0.65% and 1.15% titanium, between 0.2% and 0.8% aluminum, a maximum of 0.08% carbon, and nominal amounts (in weight percentage) of other elements; and/or
wherein the second metal alloy is a same metal as the base metal alloy; and/or
wherein the first metal alloy is at least one of:
a first nominal composition of nickel fifty-eight percent (58%), chromium 20% to 23%, iron up to 5%, molybdenum between 8% to 10%, niobium (plus tantalum) between 3.15% to 4.15%, or
a second nominal composition of nickel 63%, cobalt up to 2.5%, iron 6%, chromium 5%, molybdenum 25%, tungsten up to 1%, manganese up to 1%, silicon up to 1%, vanadium up to 0.6%, and carbon up to 0.12%.
